# EUROPÄISCHE PATENTANMELDUNG

(11) **EP 1 700 894 A2**
(43) Veröffentlichungstag der Anmeldung: **13.09.2006**
(21) Anmeldenummer: 06004473.2
(22) Anmeldetag: 06.03.2006
(51) Int. Cl.: C09J 5/00

(54) **Verfahren und Anordnung zum Verbinden**

(30) Priorität: 08.03.2005 AT 3902005
(71) Anmelder: Gapp, Bernd, 6020 Innsbruck (AT)
(72) Erfinder: Gapp, Bernd, 6020 Innsbruck (AT)
(74) Vertreter: Krause, Peter

(57) **Zusammenfassung**

Die Erfindung betrifft ein Verfahren und eine Anordnung zum Verbinden von mindestens einer starren Fläche, insbesondere einer Grundfläche (1), mit einer weiteren starren Fläche, beispielsweise einer Glas-, Leichtbeton- oder Metallplatte, oder einer flexiblen Fläche, beispielsweise einer Oberfläche einer Folie (6). Im Bereich der Verbindung ist ein Klebers (5) angeordnet. Die Grundfläche (1) wird zur Vergrößerung ihrer Oberfläche vor dem Auftragen des Klebers (5) bearbeitet. Die Vergrößerung der Grundfläche (1) wird durch, beispielsweise wabenförmige oder noppenförmige, aus ihrer oder in ihre Oberfläche ragende, Erhebungen oder in ihre Oberfläche einspringende Vertiefungen, wie Nuten, Rillen (3), Bohrungen (2), Ausbuchtungen (10) od. dgl. bzw. Kombinationen davon, durchgeführt.

## Beschreibung

Die Erfindung betrifft ein Verfahren zum Verbinden von mindestens einer starren Fläche, insbesondere einer Grundfläche, mit einer weiteren starren Fläche, beispielsweise einer Glas-, Leichtbeton- oder Metallplatte, oder einer flexiblen Fläche, beispielsweise einer Oberfläche einer Folie, wobei im Bereich der Verbindung ein Klebers angeordnet wird.

Als eine Grundfläche ist Beton seit vielen Jahren mit Abstand der wichtigste Baustoff. Gebäude, Hochhäuser, Autobahnen, Tunnels, die gesamte städtische Kanalisation, Brücken oder dergleichen könnten ohne Beton nicht so gebaut werden, wie wir es gewohnt sind. Beton ist universell einsetzbar, leicht zu verarbeiten und vergleichsweise billig. Aufgrund dieser Eigenschaften wird Beton weltweit eingesetzt und ist aus der Bauwirtschaft nicht mehr wegzudenken.

Aber der Beton hat auch zwei Eigenschaften, die sich bei der Nutzung als Baustoff sehr unangenehm bemerkbar machen. Statiker und Bautechniker haben lernen müssen, durch welche Maßnahmen diese Eigenschaften kompensiert werden können. Erstens kann Beton keine Zugspannung und sehr schlecht dynamische Wechselbeanspruchungen übertragen. Wird Beton auf Zug belastet, muss er mit Stahl verstärkt werden, wobei die Stahlstäbe die Zugbelastung übernehmen. Man bezeichnet dann diesen mit Stahl verstärkten Beton als Stahlbeton.

Die zweite negative Eigenschaft ist seine Porosität. Selbst mit abgestuften Zuschlagstoffen und spezieller Verarbeitung kann nicht verhindert werden, dass der Beton von mikrofeinen Hohlräumen durchsetzt ist. Ist der Beton ungeschützt Wind und Wetter ausgesetzt, dringen Schadstoffe, wie z.B. Salzwasser, saurer Regen oder aggressive Luft in die Poren ein und schädigen den Beton. Bei Minusgraden beispielsweise gefriert das Wasser und sprengt den Beton, so dass er sich zersetzt bzw. regelrecht zerbröselt. Das heißt: ungeschützter Beton hat nur eine begrenzte Lebensdauer.

Insbesondere bei Stahlbeton ist das Eindringen von Wasser kritisch, weil dieses Wasser den Stahl korrodiert und dadurch die kraftübertragenden Querschnitte der Stahlstäbe verkleinert. Erreicht die Abrostung eine gewisse Größe, können einzelne Stahlstäbe die Kräfte nicht mehr übertragen und reißen. Es kommt in der Folge, ähnlich dem Dominoeffekt, zu einer Überbelastung der angrenzenden Stäbe, auch wenn sie nicht angerostet sind, die dann ebenfalls versagen, so dass die gesamte Konstruktion bzw. das Bauwerk einstürzt. In der Literatur sind unzählige Totalschäden durch Kollabieren der Tragkonstruktion aus Stahlbeton infolge der unkontrollierten Armierungskorrosion dokumentiert.

Ähnliche Schäden können auftreten, wenn als Baustoff Holz Verwendung findet. Ebenso können Schäden bei Fassaden, wo Metall, Glas, Kunststoffplatten auf Beton bzw. mit einer geeigneten Unterkonstruktion verklebt werden, auftreten.

Das gefährliche Eindringen der Schadstoffe, insbesondere von Wasser, kann nur durch geeignete Schutzmaßnahmen wie beispielsweise wasserdichte Anstriche oder Kunststofffolien verhindert werden. Im Grunde genommen hängt die Lebensdauer des Baukörpers unter anderem sehr stark von der Qualität der Schutzmaßnahmen zur Verhinderung vorwiegend des Wassereindringens und der damit verbundenen unkontrollierten Armierungskorrosion ab.

Sollten jedoch Baukörper oder Kunststoffbehälter, wie Auffangwannen, gegen drückendes Wasser, also negativ, nicht abgedichtet sein, ist mit Aus- oder Unterwanderung des flüssigen Mediums zu rechnen.

Um eine verbesserte Klebestruktur zu schaffen, wurde in der AT 411 178 B1 vorgeschlagen, dass die Oberfläche der Folie vergrößert wird.

Ferner ist aus der EP 0 013 928 A1 ein Verfahren zum Aufbringen einer mehrlagigen Schutzschicht auf Betonwände od. dgl. bekannt. Beispielsweise wird in dieser Druckschrift ein Betonflachdach mit einer Tragdecke aufgezeigt, wobei auf die Tragdecke eine Dickschicht aufgebracht ist, die mit einer Dämmschicht verklebt ist. Ferner wird auch ein mit einer Kunststoff-Folie abgedichteter Tunnel beschrieben, wobei die Folie mit einer Textilkaschierung versehen ist, an die beidseitig eine Klebemasse anschließt. Nachteilig bei dieser Kunststoff-Folie ist der immens hohe Aufwand bei der Herstellung.

Weites ist aus der US 4 942 095A eine metallische Folie bekannt, bei der die Oberfläche durch chemische oder mechanische Behandlung vergrößert wird, so dass eine stabile Adhäsion zwischen der vergrößerten Oberfläche dieser Folie und einem Thermoplast erzielt wird.

Aus Kostengründen haben sich Anstriche aus den verschiedensten, wasserdichten Materialien wie Farben, flüssige Kunststoffe, besondere Mörtel, aber auch bestimmte Werkstoffmischungen, wie beispielsweise zementgebundene Mörtel mit Epoxidharzen oder dergleichen durchgesetzt. Diese Anstriche werden auf den fertigen, das heißt, ausgehärteten Beton händisch oder maschinell aufgetragen. Dabei gibt es unterschiedliche Methoden und Verfahren zum Auftragen wie z.B. streichen, rollen oder spritzen. Auch Polymerbitumenbahnen sind üblich, die allerdings etwas aufwändiger durch Flämmen aufgetragen werden.

Der Nachteil dieser Anstriche ist, dass sie im Allgemeinen auch nur eine beschränkte Lebensdauer haben und bei unsachgemäßem Auftrag oder nachträglicher Beschädigung undicht sind oder in kurzer Zeit werden.
Ein weiterer gravierender Nachteil dieser Anstriche, auch der Polymerbitumenbahnen, ist das sehr geringe Rissüberbrückungsvermögen. Die Entstehung von Rissen im Beton ist praktisch nicht zu verhindern. Risse können entweder durch die Änderung der Betoneigenschaften beim Übergang flüssig zu fest entstehen, wie beispielsweise Setzen des Betons, Schrumpfen und Schwinden oder durch die Hydratisationswärme. Auch durch unsachgemäße Anwendungen, wie beispielsweise Fehler in der Bemessung oder unplanmäßige Überlastungen, sowie durch Verarbeitungsfehler, wie gegebenenfalls Betonierfehler oder unsachgemäße Armierung entstehen Risse.

Jede Fehlstelle im Beton, wie beispielsweise Risse, Poren oder Trennfugen, stört den Kraftfluss, das heißt an den Übergängen vom Beton zur Luft, beispielsweise an den Risskanten, treten Spannungsspitzen auf. Diese können im Allgemeinen nicht nur mit den üblichen Füllmaterialien, wie beispielsweise Mörtel, Zement, Kunststoffen oder Materialmischungen, mit denen die Risse oder Fugen ausgefüllt wurden, zufrieden stellend abgebaut werden.

Ein vollständiger Abbau der Spannungsspitzen ist unbedingt notwendig, weil sich sonst der Riss erneut ausbilden kann. Das heißt die Restspannung muss über eine lokale Rissüberbrückung abgebaut werden. Da die Anstriche, wie weiter oben dargestellt, dazu kaum in der Lage sind, verwendet man besondere Kunststofffolien wie beispielsweise SIKA Icosit Flüssigfolie MS. Diese Kunststofffolien können keine Kräfte übertragen, sondern dichten den Riss inklusive Umgebung auch zuverlässig ab. Daneben haben die beispielsweise flüssig aufgetragenen Kunststofffolien noch sehr wichtige Eigenschaften für eine einfache Verarbeitung. Sie können problemlos auf nicht vollkommen trockenen Beton aufgetragen werden und eine Taupunktunterschreitung nach dem Auftragen beeinträchtigt die Qualität der Folie nicht.

Um Folien auch für die Kraftübertragung heranziehen zu können, müssen sie mit Klebern, wie z.B. Epoxidharzen auf den Baukörper geklebt werden. Dazu wird der Baukörper entsprechend vorbehandelt, wie beispielsweise gereinigt, mit einem Voranstrich behandelt und eine Schicht Kleber aufgetragen. Anschließend wird die Folie so aufgebracht, dass keine Blasen, Falten oder sonstige Unregelmäßigkeiten auftreten können.
In den meisten Fällen ist beim Kleben mit beispielsweise Epoxidharz die Haftzugfestigkeit ausreichend um großflächige Ablösungen weitgehend auszuschließen. Die Rissüberbrückung von Rissen aus beispielsweise dynamischer Belastung von kleiner einem Millimeter ist ebenfalls in den meisten Fällen vollkommen ausreichend.

Eine derartige Abdichtungsbahn für Bauwerke ist aus der DE 200 14 903 U1 bekannt. Diese Abdichtungsbahn weist eine dichtende Polyethylen-Dichtfolie mit einer kaltselbstklebenden Klebstoffschicht und einer darauf aufliegenden Trennfolie auf.

Der Nachteil dieser Methode ist, dass nur relativ geringe Kräfte über die Folien übertragen werden können. Der Kleber haftet zwar am Baukörper und auf der glatten Oberfläche der Folien, so dass eben nur eine beschränkte Kraft über die Folie übertragen werden kann.

Ein weiteres Dichtungs- und Abdeckungsmaterial in Form eines Folienverbundes ist aus der DE 35 24 580 C2 bekannt. Diese Folie weist eine Zwischenschicht auf, die an undichten Stellen des Folienverbundes freisetzbar ist und bei Berührung mit Wasser oder Luft eine Volumenvergrößerung erfährt, so dass undichte Stellen beim Entstehen von selbst abgedichtet werden. Es ist leicht einzusehen, dass mit einem derartigen Folienverbund nur kleinste Haarrisse abgedichtet werden können.

Besonders nachteilig ist die eingeschränkte Kraftübertragung beim Kleben von hochrissfesten Bändern, wie Karbonbändern oder Polyamid, so genannten CFK-Lamellen, beispielsweise SIKA CarboDur-Lamellen, oder bei Stahllaschen oder CFK-Schubwinkel zur statischen Verstärkung im Bauwesen.

Die Bedeutung der statischen Verstärkung von Bauteilen, insbesondere von Brücken, nimmt rapide zu. Auf der einen Seite wird der Neubau von Brücken durch das erwachende Umweltbewusstsein der Bevölkerung zunehmend erschwert. Dadurch müssen bestehende Brücken das erhöhte Verkehrsaufkommen mit immer größeren Lasten, für die sie zum Teil gar nicht dimensioniert sind, verkraften. Zum anderen unterliegen auch Brücken Alterungserscheinungen, wie beispielsweise Ermüdungsbrüche, die durch äußere Einflüsse noch verstärkt werden und die Tragsicherheit der Brücken drastisch reduzieren.

Daraus resultiert die Notwendigkeit der Sanierung und Verstärkung bestehender Brücken aus Holz, Beton oder Stahl. Das gilt in vermindertem Umfang auch für andere Bauten wie Tunnel, Kanalisation, Fassaden oder dergleichen.

Die statische Verstärkung, das heißt die Erhöhung der Tragfähigkeit bei Baukörpern durch Aufbringen von zusätzlichen Schichten des Urmaterials ist nur in Ausnahmefällen zielführend. Zweckmäßiger und daher allgemein angewendet wird das Aufkleben hochfester Bänder oder Lamellen aus beispielsweise Stahl bzw. Karbon oder Polyamid auf die Bauteile. Da Stahllaschen oder CFK-Lamellen sehr hohe Zug- und Schubkräfte übertragen können, erweist sich die geringe Haftung des Klebers an den zu befestigten, glatten Oberflächen als besonders nachteilig.

Aufgabe der Erfindung ist es, ein Verfahren der eingangs genannten Art zu schaffen, das einerseits die obigen Nachteile vermeidet und das anderseits eine einfache und wirtschaftliche Möglichkeit zur Übertragung von großen Kräften mittels einer Kleberstruktur schafft.

Die Aufgabe wird durch die Erfindung gelöst.

Das erfindungsgemäße Verfahren ist dadurch gekennzeichnet, dass die Grundfläche zur Vergrößerung ihrer Oberfläche vor dem Auftragen des Klebers bearbeitet wird. Mir der Erfindung ist es erstmals möglich, eine verstärkte Erhöhung der Haftung von Klebern zu erreichen, so dass für die zu verklebenden Teile eine bessere Verbindung gewährleistet ist und weiters ein Unterwandern bzw. Auswandern oder Eindringen durch Flüssigkeiten, insbesondere von Wasser, im Bereich der Klebestellen zu verhindern.

Nach einer besonderen Ausgestaltung der Erfindung wird die Vergrößerung der Grundfläche durch, beispielsweise wabenförmige oder noppenförmige, aus ihrer oder in ihre Oberfläche ragende, Erhebungen oder in ihre Oberfläche einspringende Vertiefungen, wie Nuten, Rillen, Bohrungen od. dgl. bzw. Kombinationen davon, durchgeführt. Diese erfindungsgemäße Ausgestaltung des Verfahrens erlaubt eine Oberflächenvergrößerung der für die Verklebung entsprechenden Grundfläche, so dass mit einem geringfügig größeren Materialaufwand an Klebermasse das Haftabzugsmoment gravierend erhöht wird.

Gemäß einem besonderen Merkmal der Erfindung wird die Vergrößerung der Grundfläche mechanisch, beispielsweise durch Aufrauen, Schaben, Schleifen, Gravieren, Fräsen, Bohren, Einschlagen od. dgl. durchgeführt. Das hat den Vorteil, dass die Bearbeitung der Grundfläche zur nachträglichen Oberflächenvergrößerung auf der Baustelle, vorzugsweise unmittelbar vor dem Klebevorgang erfolgt, wo auch immer geeignete Geräte und Werkzeuge vorhanden sind. Außerdem wird die Struktur des die Grundfläche bildenden Bauwerkes durch die erfindungsgemäße Oberflächenvergrößerung kaum verändert oder beeinträchtigt.

Nach einem alternativen Merkmal der Erfindung wird die Vergrößerung der Grundfläche chemisch, beispielsweise durch eine chemische Lösung, wie ein Lösungsmittel, durchgeführt. Es liegt durchaus im Bereich der Erfindung auch diese Art der Oberflächenvergrößerung durchzuführen. In Zukunft wird sicher von den Bautechnikern diese Methode gerne angewandt werden, da sie wirtschaftlich, vor allem in kurzer Zeit, zu Erfolg versprechenden Resultaten führt.

Die Aufgabe der Erfindung wird aber unabhängig vom Verfahren auch durch eine Anordnung zur Durchführung des erfindungsgemäßen Verfahrens gelöst.

Die erfindungsgemäße Anordnung zur Durchführung des Verfahrens ist dadurch gekennzeichnet, dass die zur Verbindung vorgesehene Grundfläche eine künstlich bzw. willkürlich vergrößerte Oberfläche aufweist. Durch die vergrößerte Oberfläche wird ein höheres Haftabzugsmoment nach der Verklebung der beiden Teile erreicht. Durch die bessere Haftung wird eine Unterwanderung durch Flüssigkeiten sowie eine Rissbildung und eine Abspaltung der befestigten Teile durch Frost oder Korrosion vermieden.

Nach einem weiteren Merkmal der Erfindung besteht die Grundfläche aus Beton, Ton, Keramik, Holz, Metall oder Kunststoff. Natürlich ist die Anwendung nicht auf Beton beschränkt. Prinzipiell sind alle bearbeitbaren Materialien dafür geeignet.

Gemäß einer Weiterbildung der Erfindung ist die zu verklebende Fläche eine Fläche einer Folie, wie beispielsweise Kunststoff-, Metall- oder Flüssigfolie, oder eines Lamellenbandes, beispielsweise aus Karbon bzw. CFK, Glas oder Kunststoff, oder einem Bauteil, der beispielsweise aus Beton, Ton, Keramik, Metall, Glas oder Kunststoff besteht. Ebenso unterliegt natürlich die zu verklebende Fläche von der Materialwahl keiner Beschränkung.

Nach einem besonderen Merkmal der Erfindung ist der Kleber beispielsweise ein organischer, anorganischer, tixotroper oder flüssiger Kleber, wobei gegebenenfalls Zuschlagstoffe und/oder eine Bewehrung vorgesehen sind. Mit derartigen Klebern wurden im Zusammenhang einer Vergrößerung der Oberfläche hervorragende Werte des Haftabzugsmomentes erreicht.

Gemäß einer besonderen Ausgestaltung der Erfindung ist die Grundfläche, beispielsweise durch wabenförmige oder noppenförmige, aus ihrer Oberfläche ragende Erhebungen oder in ihre Oberfläche einspringende Vertiefungen, wie beispielsweise Nuten, Rillen, Bohrungen, Ausbuchtungen od. dgl. bzw. Kombinationen davon, vergrößert. Eine wirtschaftlich einfache Herstellung der Klebefläche ist dadurch gewährleistet.

Nach einem besonderen Merkmal der Erfindung ist die Oberfläche der Grundfläche mechanisch, beispielsweise durch Aufrauen, Schaben, Schleifen, Gravieren, Fräsen, Bohren, Einschlagen od. dgl. vergrößert. Dadurch kann direkt vor Ort von den Baufacharbeitern entschieden werden, welche Oberfläche eingesetzt wird, um das erforderliche Haftabzugsmoment zu erzielen.

Gemäß einem alternativen Merkmal der Erfindung ist die Grundfläche chemisch, beispielsweise durch eine chemische Lösung, wie ein Lösungsmittel, vergrößert. Da die Bauwirtschaft schon immer mit der Chemie stark verbunden ist, sind keine Vorurteile zu erwarten, so dass auch mit geeigneten chemischen Mitteln eine Vergrößerung der Oberfläche erreicht wird, wodurch ein höheres Haftabzugsmoment gegeben ist.

Die Erfindung wird an Hand von Ausführungsbeispielen, die in der Zeichnung dargestellt sind, näher erläutert. Es zeigen:
Fig. 1 a bis 1 d verschiedene Vergrößerungen von Grundflächen;
Fig. 2 einen Schnitt durch eine Klebestelle;
Fig. 3 einen Schnitt durch eine weitere Klebestelle;
Fig. 4 einen Schnitt einer Fundamentabdichtung und
Fig. 5 a und 5b einen Schnitt durch eine Ecke einer rechtwinkeligen Mauer.

Einführend sei festgehalten, dass in der beschriebenen Ausführungsform gleiche Teile bzw. Zustände mit gleichen Bezugszeichen bzw. gleichen Bauteilbezeichnungen versehen werden, wobei die in der gesamten Beschreibung enthaltenen Offenbarungen sinngemäß auf gleiche Teile bzw. Zustände mit gleichen Bezugszeichen bzw. gleichen Bauteilbezeichnungen übertragen werden können.

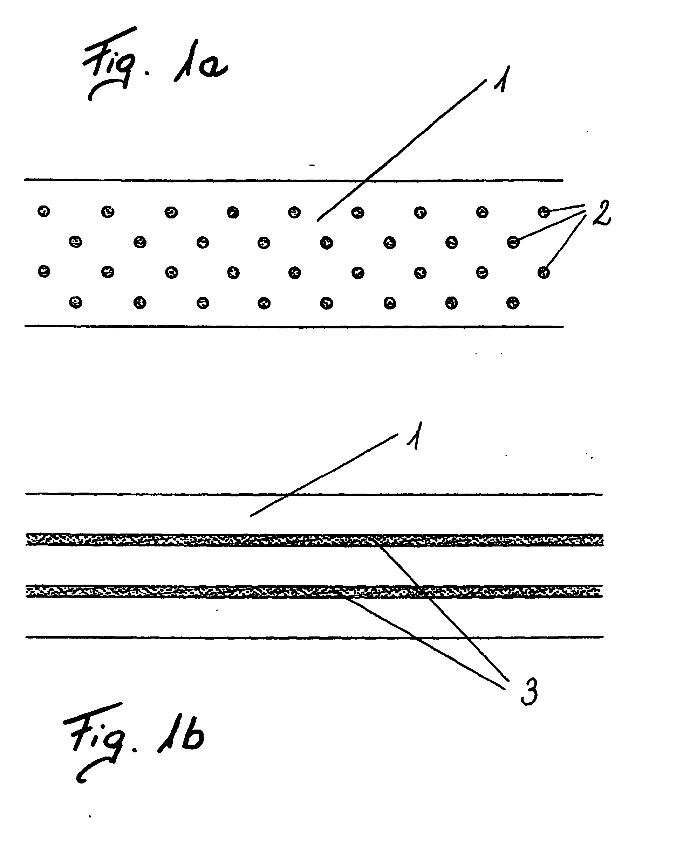

Gemäß den Fig. 1a bis 1 d sind verschiedene Grundflächen 1 dargestellt, die vor dem Auftragen des Klebers zur Vergrößerung ihrer Oberflächen bearbeitet wurden.

So zeigt Fig. 1 a eine Grundfläche 1, die zur Vergrößerung der Klebefläche mit Vertiefungen in Form von Bohrungen 2 oder gebohrten Löchern im Bereich der Klebestelle versehen ist.

Weiters zeigt die Fig. 1b eine Grundfläche 1, die zur Vergrößerung der Klebestelle gefräste Rillen 3 aufweist.

Gemäß der Fig. 1 c wird die Vergrößerung durch eine Kombination von kurzen gefrästen Rillen 3 und Bohrungen bzw. gebohrten Löchern erreicht.

Entsprechend der Fig. 1d wird die Vergrößerung der Klebefläche mit Vertiefungen erreicht, in dem eine vertiefte Fläche 4 geschaffen wird, die in der Draufsicht wellenförmig ist und in der horizontalen Tiefe regelmäßig oder unregelmäßig gestaltet ist. Die unregelmäßigen Vertiefungen können, ähnlich einer Berg- und Talstruktur, mit Erhebungen und Vertiefungen gestaltet sein.

Von Bedeutung ist, dass entsprechend dem Verfahren bzw. dieser Anordnung zum Verbinden von mindestens einer starren Fläche, insbesondere einer Grundfläche 1, mit einer weiteren starren Fläche, beispielsweise einer Glas-, Leichtbeton- oder Metallplatte, oder einer flexiblen Fläche, beispielsweise einer Oberfläche einer Folie, diese Grundfläche vor dem Auftragen einer Klebesubstanz vergrößert wird. Die zur Verbindung vorgesehene Grundfläche 1 muss eine künstlich bzw. willkürlich vergrößerte Oberfläche aufweisen.

Die Vergrößerung der Grundfläche 1 kann mechanisch, beispielsweise durch Aufrauen, Schaben, Schleifen, Gravieren, Fräsen, Bohren, Einschlagen od. dgl. durchgeführt werden.

Mit der Vergrößerung der Grundfläche 1 ist eine verstärkte Erhöhung der Haftung von der Klebersubstanz zu erreichen, so dass für die zu verklebenden Teile eine bessere Verbindung gewährleistet ist und weiters ein Unterwandern bzw. Auswandern durch Flüssigkeiten, insbesondere von Wasser, im Bereich der Klebestellen verhindert wird. Durch die vergrößerte Oberfläche wird ein höheres Haftabzugsmoment nach der Verklebung der beiden Teile erreicht.

Als alternative zur mechanischen Vergrößerung könnte eine die Vergrößerung der Grundfläche 1 chemisch, beispielsweise durch eine chemische Lösung, wie ein Lösungsmittel, sein.

Natürlich ist die Grundfläche 1 nicht auf Beton beschränkt. Sie kann aus Glas, Ton, Keramik, Holz, Metall oder Kunststoff bestehen. Die mit dem Profil ausgestatteten Kleberträger können natürlich auch industriell vorgefertigt und entsprechend ihrem Bedarf angeliefert werden.

Ein besonderer Anwendungsfall für eine derartige Verklebung könnte auch eine Fassade sein. In einem derartigen Fall werden auf die Oberfläche eines Gebäudes Blech- oder Glasplatten auf einem Metall- oder Kunststoffraster verklebt.

Ein weiterer Fall für eine Anwendung könnte bei Tunnelauskleidungen gegeben sein.

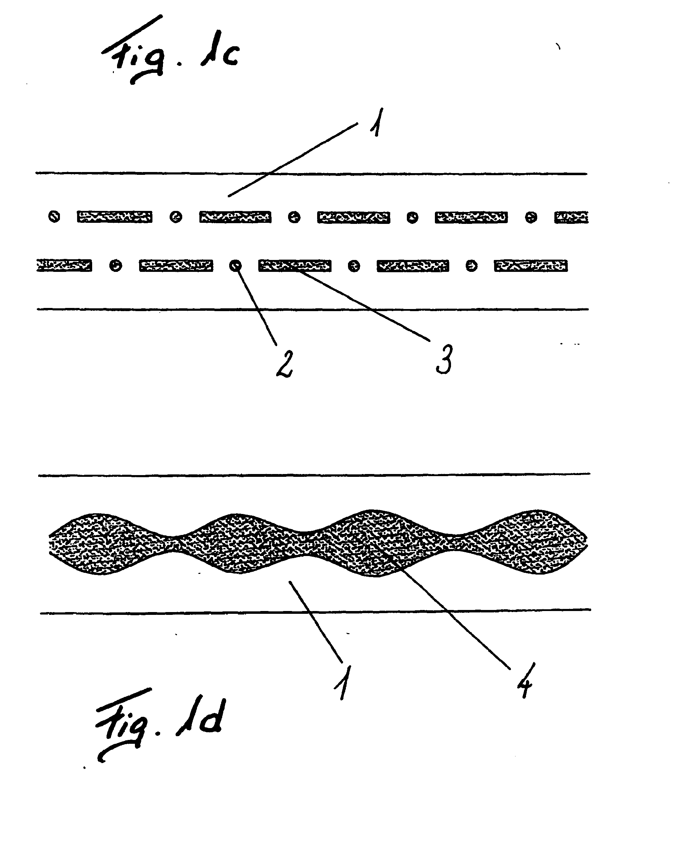

Gemäß der Fig. 2 ist eine Klebeverbindung gezeigt, wobei die Vergrößerung der Klebefläche mit einer vertieften, unregelmäßigen Grundfläche 1 erreicht wird, die ähnlich der vertieften Fläche 4 in Fig. 1d gestaltet wird. Die unregelmäßigen Vertiefungen können, ähnlich einer Berg- und Talstruktur, mit Erhebungen und Vertiefungen gestaltet sein.

Wie bereits erwähnt, ist das Material der Grundfläche 1 nicht auf Beton beschränkt, sondern könnte auch aus Ton, Keramik, Holz, Metall oder Kunststoff bestehen.

Auf diese Grundfläche 1 wird der Kleber 5 aufgetragen. Die Kleberauswahl wird dem erwünschten Zweck entsprechen bzw. auf die Materialgegebenheiten Rücksicht nehmen. Durch die Unregelmäßigkeiten der Grundfläche 1 wird diese vergrößert und es wird ein marginaler Mehraufwand an Kleber 5 Verwendung finden.

Zur Verklebung mit der Grundfläche 1 wird eine Folie 6 verwendet. Diese Folie 6 kann eine Hypalon- oder Kunststoff-Folie oder ein Karbon-Lamellen-Band, gegebenenfalls mit einer Bewehrung aus Glasfasern, sein.

Diesem Mehraufwand an Kleber 5 steht ein überaus erhöhtes Haftabzugsmoment gegenüber. Ferner kann dadurch ein Unterwandern bzw. Auswandern durch Flüssigkeiten, insbesondere von Wasser, im Bereich der Klebestellen zu verhindert werden.

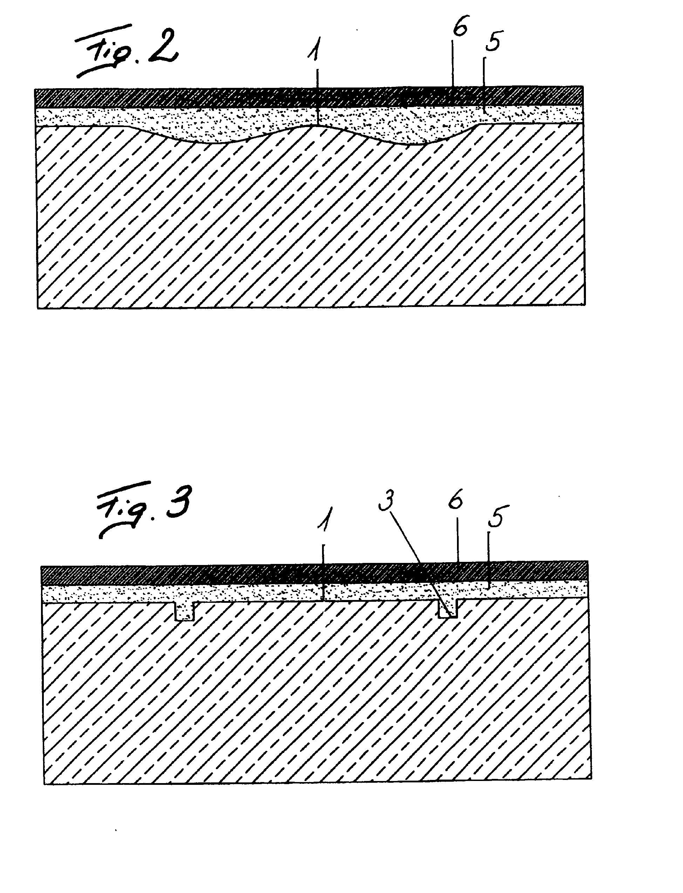

Entsprechend der Fig. 3 wird die Grundfläche 1 durch ein Einfräsen von Rillen 3 oder Nuten vergrößert. Die Grundfläche 1 wird wieder mit Kleber 5 bestrichen und die Folie 6 aufgebracht.

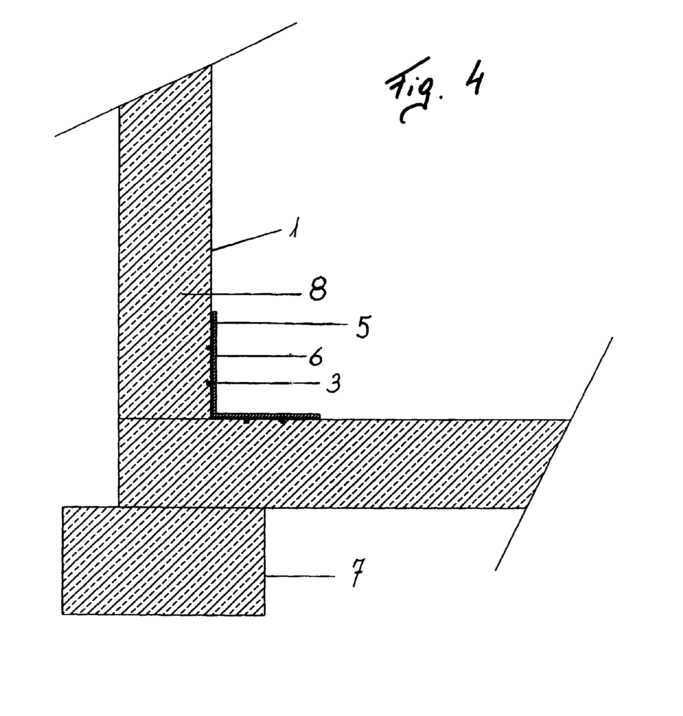

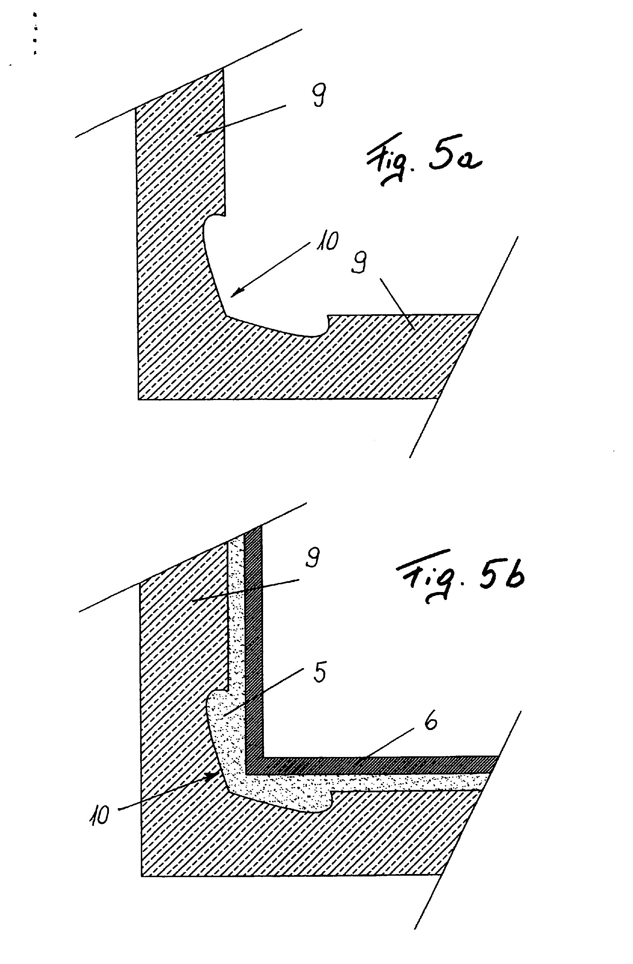

Gemäß der Fig. 4 ist eine Fundamentierung 7 mit Stahlbetonmauern 8 gezeigt, wobei im Mauereck eine Folie 6 angeordnet ist. Zur Vergrößerung der Grundfläche 1 der Stahlbetonmauer 8 für die Verklebung wird die Grundfläche 1 mit Rillen 3 versehen. Diese vergrößerte Oberfläche wird mit Kleber 5 versehen und die Folie 6 verklebt. Insbesondere in diesem aufgezeigten Beispiel ist erkennbar, dass ein Unterwandern bzw. Auswandern durch Flüssigkeiten, insbesondere von Wasser, im Bereich der Klebestellen zu verhindert wird. Entsprechend der Fig. 5a und 5b ist eine rechtwinkelige Ecke von zwei aneinander stoßenden Mauern 9, die natürlich jeden anderen beliebigen Winkel auch einschließen könnten, aufgezeigt. Der unmittelbare Bereich der Ecke wird künstlich bzw. willkürlich vergrößert. Die Vergrößerung erfolgt durch eine im Querschnitt herzförmige Ausbuchtung 10 der Grundfläche 1 des Mauerwerks.

Die Ausbuchtung 10 wird mechanisch durch beispielsweise Ausbrechen oder Ausschaben des Mauerwerks hergestellt.
Diese Ausbuchtung 10 wird mit dem anschließenden Bereich der Grundfläche 1 mit Kleber 5 versehen. Auf den Kleber 5 wird die Folie 6 aufgebracht.

Durch die Vergrößerung der Grundfläche 1 mittels der Ausbuchtung 10 wird die Fläche des Kleberauftrages vergrößert. Dadurch wird ein höheres Haftabzugsmoment erzielt.

Abschließend sei der Ordnung halber darauf hingewiesen, dass in der Zeichnung einzelne Bauteile und Baugruppen zum besseren Verständnis der Erfindung unproportional und maßstäblich verzerrt dargestellt sind.

## Patentansprüche

1. Verfahren zum Verbinden von mindestens einer starren Fläche, insbesondere einer Grundfläche, mit einer weiteren starren Fläche, beispielsweise einer Glas-, Leichtbeton- oder Metallplatte, oder einer flexiblen Fläche, beispielsweise einer Oberfläche einer Folie, wobei im Bereich der Verbindung ein Klebers angeordnet wird, **dadurch gekennzeichnet, dass** die Grundfläche (1) zur Vergrößerung ihrer Oberfläche vor dem Auftragen des Klebers (5) bearbeitet wird.

2. Verfahren nach Anspruch 1, **dadurch gekennzeichnet, dass** die Vergrößerung der Grundfläche (1) durch, beispielsweise wabenförmige oder noppenförmige, aus ihrer oder in ihre Oberfläche ragende, Erhebungen oder in ihre Oberfläche einspringende Vertiefungen, wie Nuten, Rillen (3), Bohrungen (2), Ausbuchtungen (10) od. dgl. bzw. Kombinationen davon, durchgeführt wird.

3. Verfahren nach Anspruch 1 oder 2, **dadurch gekennzeichnet, dass** die Vergrößerung der Grundfläche (1) mechanisch, beispielsweise durch Aufrauen, Schaben, Schleifen, Gravieren, Fräsen, Bohren, Einschlagen od. dgl. durchgeführt wird.

4. Verfahren nach mindestens einem der Ansprüche 1 bis 3, **dadurch gekennzeichnet, dass** die Vergrößerung der Grundfläche (1) chemisch, beispielsweise durch eine chemische Lösung, wie ein Lösungsmittel, durchgeführt wird.

5. Anordnung zur Durchführung des Verfahrens nach mindestens einem der Ansprüche 1 bis 4, **dadurch gekennzeichnet, dass** die zur Verbindung vorgesehene Grundfläche (1) eine künstlich bzw. willkürlich vergrößerte Oberfläche aufweist.

6. Anordnung nach Anspruch 5, **dadurch gekennzeichnet, dass** die Grundfläche (1) aus Beton, Ton, Keramik, Holz, Metall oder Kunststoff besteht.

7. Anordnung nach Anspruch 5 oder 6, **dadurch gekennzeichnet, dass** die zu verklebende Fläche eine Fläche einer Folie (6), wie beispielsweise Kunststoff-, Metall- oder Flüssigfolie, oder eines Lamellenbandes, beispielsweise aus Karbon, Glas oder Kunststoff, oder einem Bauteil, der beispielsweise aus Beton, Ton, Keramik, Metall, Glas oder Kunststoff besteht, ist.

8. Anordnung nach mindestens einem der Ansprüche 5 bis 7, **dadurch gekennzeichnet, dass** der Kleber (5) beispielsweise ein organischer, anorganischer, tixotroper oder flüssiger Kleber (5) ist, wobei gegebenenfalls Zuschlagstoffe und/oder eine Bewehrung vorgesehen sind.

9. Anordnung nach mindestens einem der Ansprüche 5 bis 8, **dadurch gekennzeichnet, dass** die Grundfläche (1), beispielsweise durch wabenförmige oder noppenförmige, aus ihrer Oberfläche ragende Erhebungen oder in ihre Oberfläche einspringende Vertiefungen, wie beispielsweise Nuten, Rillen (3), Bohrungen (2), Ausbuchtungen (10) od. dgl. bzw. Kombinationen davon, vergrößert ist.

10. Anordnung nach mindestens einem der Ansprüche 5 bis 9, **dadurch gekennzeichnet, dass** die Oberfläche der Grundfläche (1) mechanisch, beispielsweise durch Aufrauen, Schaben, Schleifen, Gravieren, Fräsen, Bohren, Einschlagen od. dgl. vergrößert ist.

11. Anordnung nach mindestens einem der Ansprüche 5 bis 10, **dadurch gekennzeichnet, dass** die Grundfläche (1) chemisch, beispielsweise durch eine chemische Lösung, wie ein Lösungsmittel, vergrößert ist.
